# EUROPEAN PATENT APPLICATION

(11) **EP 1 941 820 A1**
(43) Date of publication of application: **09.07.2008**
(21) Application number: 06761523.7
(22) Date of filing: 20.07.2006
(51) Int. Cl.: A47J 43/04, A47J 37/00, A47J 27/00, A47J 36/00

(54) **PAN-TURNING METHOD AND DEVICE THEREOF**

(30) Priority: 22.07.2005 CN 200510036058
(71) Applicant: Liu, Xiaoyong, P.O. Box 054-11 Shenzhen, Guangdong 518-067 (CN)
(72) Inventor: Liu, Xiaoyong, P.O. Box 054-11 Shenzhen, Guangdong 518-067 (CN)
(74) Representative: Richardt, Markus Albert
(86) International application number: PCT/CN2006/001788
(87) International publication number: WO 2007/009391

(57) **Abstract**

The present invention discloses a method for waggling or shaking a pot comprises the following steps: (1) moving a pot in a planar or curved surface, and (2) accelerating or decelerating the pot at an appropriate position and at appropriate moment, and thus making all of or part of the materials in the pot to move linearly, curvilinearly or circularly. The present invention also discloses a device for waggling or shaking a pot to perform the above method, comprising a pot, a motion mechanism, a driving mechanism, and a control system, in which the driving mechanism drives the motion mechanism and the pot to make a linear, curvilinear or circular movement in a planar or curved surface in variable speed.

## Description

### Field of the Present Invention

The present invention relates to a method for waggling or shaking a pot or a cooker and a device which can be used to implement this method. More particularly, the present invention relates to an automatic or semi-automatic method for waggling a pot during a cooking process as well as an automatic or semi-automatic device for waggling a pot which can be used in a cooking equipment or a cooking machine.

### Background of the Present Invention

Pot waggling is one of turning actions which are very important and common during a cooking process, especially during a professional Chinese cooking. The action of waggling a pot is to make the pot move in a planar or curved surface and thus make the cooking materials in it produce a movement relative to its surface, tumble or turn over through an acceleration or deceleration. The cooking materials usually move along a straight line within the pot when waggling the pot, such as forward, backward, leftward, rightward, and/or aslant motion, planar or curved motion, circle motion, rotation, tumbling and overturn, etc. The purpose is to make materials not stuck to a pot and heated evenly.

The automatic or semi-automatic overturn for materials is one of the significant preconditions for implementing an automatic/semi-automatic cooking. And waggling a pot automatically or semi-automatically is one of keys for turning over materials in a pot automatically or semi-automatically. Waggling a pot automatically or semi-automatically can not only reduce labor greatly, but also improve the accuracy and consistency of the action and strength for waggling a pot.

Chinese patent 03157344.4 discloses an intelligent automatic cooking apparatus which comprises a mechanical device for waggling a scoop. The device further comprises two synchronous and parallel wheels with equal diameter in which the points in equal diameter are connected through connection bearing, a connection axis and a scoop bracket. It is driven by a belt to make the scoop move in circle. But this device can not produce a sufficiently large acceleration for a pot at a proper position and time, and thus it can not make materials in pot move in same or similar way as that performed by the action of waggling a pot.

### Description of the Present Invention

One of the objects of the present invention is to provide an automatic or semi-automatic method for waggling a pot in an accurately controlled manner. In the present method a pot is driven by a motion mechanism to move in variable speed. That is, the pot is accelerated or decelerated at proper position and time. Such a motion manner can make the position of cooking materials in the pot changed, not to stuck to the pot and heated evenly.

Another objects of the present invention is to provide a pot-waggling device for implementing the above method which can be used for various cooking machines, especially for an automatic and/or semi-automatic cooking machine for Chinese dishes, to replace labor work of a human being with better stability, better accuracy and individuation.

The automatic or semi-automatic method of the present invention for waggling a pot comprises the following steps:
(1) moving a pot in a planar or curved surface, and
(2) accelerating or decelerating the pot at an appropriate position and at appropriate moment, and changing the positions of at least part of materials in the pot.

In the present invention the changing of the positions of the above materials means the position change of the materials relative to the body of the pot, especially the position change of the material relative to the inner surface of the pot.

The above-mentioned moving of the pot means any movement of the body of the pot which can make the materials stuck not to the pot and heated evenly, such as displacement, overturn and/or rotation in a planar or curved surface which is along a straight line, a curved line, or a segment of a spiral or a circle.

The above-mentioned moving of the pot comprises a translational vector in the horizontal and/or vertical direction of the working platform of a cooking equipment. This translational vector can be a kind of continuous, un-continuous and/or reciprocating motion. This translation together with a translational acceleration or deceleration can change the position of part of or total materials in the pot.

The above-mentioned moving of the pot can further comprise a continuous, un-continuous and/or reciprocating rotation around a straight line as its axis, for instance around a straight line in the horizontal direction, around a straight line in the vertical direction or around an upward-sloping line relative to the working platform of a cooking equipment. The rotation alone or its combination with an acceleration or deceleration can also change the position of part of or total materials in the pot.

In the present invention when waggling a pot the moving of the pot can be a circular movement in a curved line or in a curved surface with or without rotation. If there is a rotation the position of the axis for rotating can be changeable. Here " circular " means in a standard circle as well as in other regular or irregular shape, such as in an ellipse, in an egg-shape, etc. The circle here can be closed or not closed. That means the circle here can be a complete circle or an incomplete circle.

In the present invention when waggling a pot the moving of the pot can be a movement in a straight line or similar movement. Namely the pot can move in a straight line strictly or similarly. In practice, the movement in a straight line can usually be a reciprocating movement.

In the present invention the acceleration can be positive or negative, unchangeable or changeable, or linear acceleration or angular acceleration. Different acceleration can be selected depending on different cooking processes. For example an acute acceleration, an acute deceleration or an immediate stop can be adopted. During an action for waggling a pot the pot can be applied with an acceleration twice or more, or with several different acceleration speeds.

In the present invention the appropriate moment or position means a time during a cooking process, a position of a pot or a position of the materials in a pot in which a waggling or an overturn for the pot is expected in order to speed it up or slow it down according to the cooking process. For instance, when waggling a pot in a circle the pot can be accelerated at the beginning, and when the pot together with the materials in it reaches a certain speed it can be decelerated to make the materials produce a relative motion to the surface of the pot. As another instance, when waggling a pot in a straight line the pot can be accelerated at first, and when reaching an aim speed it can be decelerated and stop. Then it can be accelerated in the reverse direction, decelerated and stop. The appropriate time and position depends on materials themselves, the form of materials, the amount of materials, a cooking process itself, the type of dish, the duration and degree of heating, the environment, etc.

The above-mentioned moving of the pot can be a combination of different movements. That means other movements can be performed when waggling a pot. For example, a pot can be waggled in a circle while turned it over along the horizontal axis.

The method of waggling a pot in the present invention also comprises turning over the materials with the assistance of a turning-over or stirring tool. The turning-over tool can be a shovel, a ladle, a fork, a stick, a comb, a stirrer with planar or curvy surface, a stirrer which can rotate, make linear movement or make curvilinear movement, etc. This kind of turning-over tool can be controlled manually, or semi-automatically or automatically by a control system.

The method of waggling a pot in the present invention also comprises moving the materials in the pot to an appropriate area at an appropriate time. This can be done through the movement of the pot or through the above turning-over tool. For example, the pot can be tilted beforehand so as to move the material in the pot away from its center. The appropriate area mentioned here refers to a place where the materials are relatively easy to be adjusted to the desired position or to move against the inner surface of the pot while waggling, or where the materials are easy to be heated correctly or evenly when the materials is placed on this area.

The present invention also provides a device to implement the above method for waggling or shaking a pot, comprising the pot, a motion mechanism and a driving mechanism. The pot is installed on the motion mechanism or connected to the motion mechanism. The motion mechanism can make a linear, curvilinear or circular movement in a planar or curved surface. The driving mechanism is a mechanism which can drive the motion mechanism and the pot to make a linear, curvilinear or circular movement in a planar or curved surface in variable speed.

The above-mentioned driving mechanism can be a power unit which can provide the motion mechanism with an acceleration at an appropriate moment during moving. The driving mechanism can be a speed-adjusting or speed-changing power unit which can produce an enough acceleration or deceleration, such as a speed control motor, etc.

The above-mentioned motion mechanism can be a mechanism which can produce an enough acceleration when driven by the driving mechanism, such as a slider-crank mechanism. The slider-crank mechanism has the characteristic of quick return with an acceleration being produced at or near two end positions. In such an case, the above driving mechanism can be or can not be a speed-adjusting or speed-changing power unit which can just provide a constant driving force during the whole waggling process or during certain stages of the waggling. Of course, the acceleration produced by the motion mechanism can be combined with that produced by the driving mechanism.

In the present invention the above driving mechanism can be an electricity-driving unit, a magnetic-driving unit, an aerodynamic-driving unit, a hydraulic-driving unit, and/or a mechanic-driving unit, which can be with or without a transmission mechanism..

In the present invention the device for waggling a pot can further include a second motion mechanism or more motion mechanisms which can generate different speeds. For example these mechanisms can produce different types of linear movement, curvilinear movement, rotation and/or circular movement. They can also produce movements in different manners for changing speed, in different accelerations or in different directions. These mechanism can be mutually independent or in combination with each other. And each motion mechanism may have its own driving mechanism and transmission mechanism, or share all of or a part of the driving mechanisms and transmission mechanisms.

The above device for waggling a pot can further include a turning-over or stirring tools such as a shovel, a ladle, a fork, a stick, a comb, a stirrer with planar or curved surface, a stirrer which can rotate, make linear movement or make curvilinear movement, etc. These turning-over or stirring tools can be controlled manually, or semi-automatically or automatically by a control system, assisting the device for waggling a pot to move or turn over the material in the pot.

The above-mentioned device for waggling a pot can further include a control system which can be a computer, a programmed controller, an electric and/or magnetic unit, an aerodynamic unit, a hydraulic unit, a mechanic unit, etc. The control system can be an independent control system or a control system integrated within the general control system of a cooking equipment. It controls the startup/stop, the movement type such as linear movement, curvilinear movement, rotation and/or the combination thereof, the movement magnitude such as the rotation magnitude and the displacement of the linear or curvilinear movement, and/or the strength such as the speed or the acceleration, etc.

The above control system determines the time and manner of the operation of the pot-waggling device according to the stored or input information, data, instructions and/or controlling programs which are related to the cooking. Through the driving mechanism and/or the transmission mechanism the control system controls one, more or all of the parts of the pot-waggling device. As another example the control system can control a prompt unit to send out a prompt signal in sound, light, electric or text to instruct a human user to operate one, more or all of the parts of the pot-waggling device.

The present invention still further provides an automatic or semi-automatic cooking equipment in which the device for waggling a pot is installed.

Compared with the prior art the waggling method of the present invention can waggle a pot automatically or semi-automatically with an accurate control on the movement manner, the movement magnitude, the acceleration and/or the deceleration, which can not be realized in any prior art. The method of the present invention can control waggling according to different types of materials and different cooking techniques or dishes with individualized waggling movements. The pot-waggling device of the present invention can replace human hands to complete an automatic or semi-automatic waggling in a individualized way with an accuracy which can not be reached by a human being or any prior device. The device can reduce labor greatly and raise the correctness and consistency of repetition for waggling a pot.

The method and device of the present invention are especially suitable to an automatic or semi-automatic cooking method and cooking equipment.

The present invention is explained in detail with figures and specific embodiments.

### Brief Description of the Drawings

Figure 1 is an illustrating view of a pot-waggling device with single motion mechanism in one embodiment of the present invention.
Figure 2 is an illustrating view of a pot-waggling device with single motion mechanism in another embodiment of the present invention.
Figure 3 is an illustrating view of a pot-waggling device with single motion mechanism in still another embodiment of the present invention.
Figure 4 is an illustrating view of a pot-waggling device with a second motion mechanism in one embodiment of the present invention.
Figure 5 is an illustrating view of a pot-waggling device with a second motion mechanism in another embodiment of the present invention.
Figure 6 is an illustrating view of a pot-waggling device with a second and a third motion mechanisms in one embodiment of the present invention.
Figure 7 is an illustrating view of a pot-waggling device in a further embodiment of the present invention.

### Modes of Embodiments

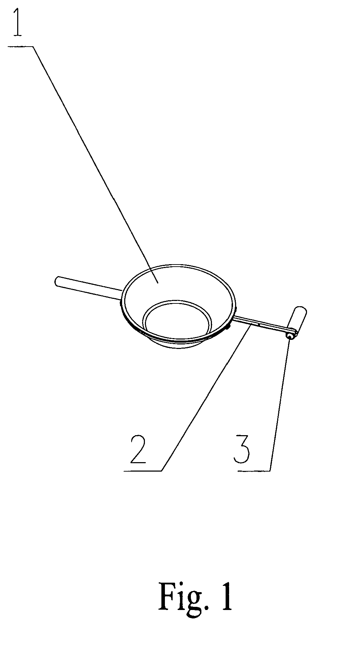

As shown in figure 1, a pot-waggling device, which can make linear movement and can be used to realize a method for waggling a pot, is demonstrated, in which 1 is pot, 2 is a rack for translational displacement, and 3 is a motor for translational displacement. The motor 3 drives rack 2 to perform a continuous, un-continuous or reciprocating movement in linearly with variable speed, and drives pot 1 which is connected to rack 2 to perform the same movement.

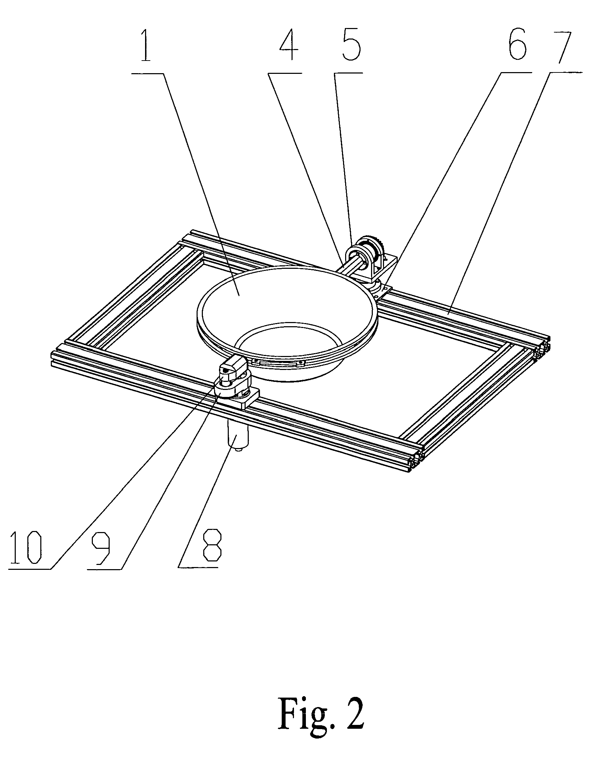

Figure 2 shows a pot-waggling device which can make circular movement and can be used to realize a method for waggling a pot with a slider-crank mechanism adopted. A motor 8 drives crank 9 to rotate. 10 is the crank connecting rod. A sliding connecting rod 4, which is in form of shaft and connected to the pot 1, slides forwards and backwards in the hole in a rotation bracket 5. The rotation bracket 5 is equipped with a vertical axis, rotating with change of angle when the sliding connecting rod 4 sliding. The rotation bracket 5 is connected to a frame 7 through a supporting base 6. The pot 1 can make a circular movement clockwise or anticlockwise with variable speed, driven by the slider-crank mechanism. Such a circular movement can be continuous, un-continuous or reciprocating. The motor 8 can be a speed-adjusting motor which can accelerate or decelerate the slider-crank mechanism at appropriate position or at appropriate moment under the control of a control system. The slider-crank mechanism 9, 10 and 4 can produce an acceleration or a deceleration when passing through the two end-limit points. With suitable setting on sizes and proportions of its parts as well as the rotating speed of the motor, different accelerations or decelerations can be produced. The sizes and proportions of each part of the slider-crank mechanism can be designed to be all or partly adjustable automatically or semi-automatically under the control of a control system or manually under the prompt of a control system to meet different requirements of cooking.

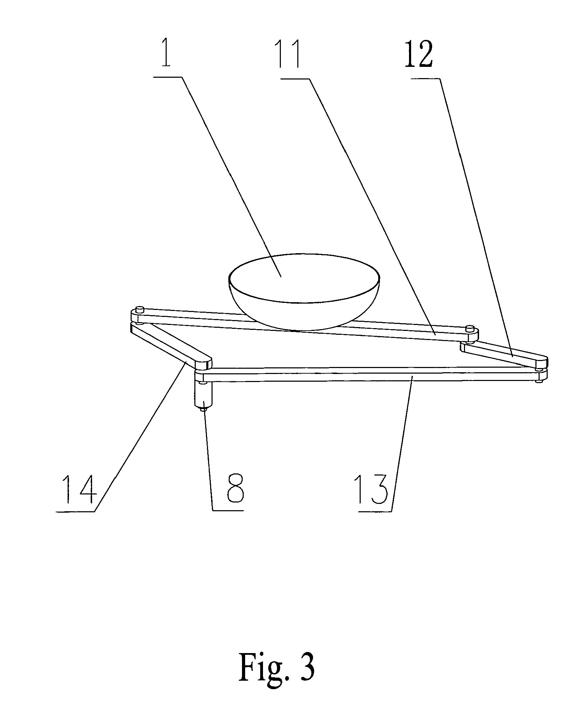

Figure 3 demonstrates another embodiment of the present invention, in which a motion mechanism with a four-connecting-rod mechanism, i.e. a four-bar mechanism, is used. 14 is the active connecting rod, 12 is the passive connecting rod, 13 is the fixed connecting rod, and 11 is the connecting rod connected to the pot 1. Motor 8 can drive the active connecting rod to rotate, making the pot connecting rod 11 and the pot 1 move circularly with variable speed together.

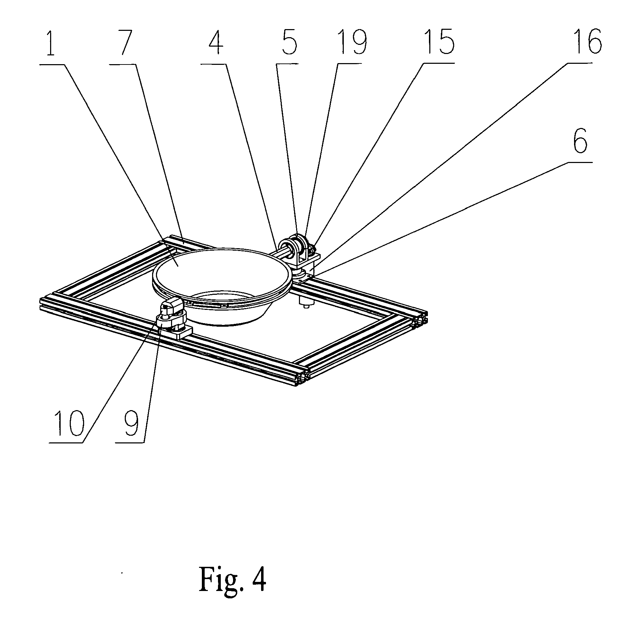

Figure 4 shows a pot-waggling device with a second motion mechanism. A rotation mechanism, comprising a rotation motor 16, a rotation active bevel gear 15 and a passive bevel gear 19 installed on the sliding connecting rod 4 in form of shaft, is added on the slider-crank mechanism as that shown in figure 2. This rotation mechanism can drive pot 1 to rotate continuously, un-continuously or reciprocally with constant or variable speed around the sliding connecting rod 4 in form of shaft. Such a rotation can function alone to turn over or shake the materials in the pot, or can be combined with a circular movement to implement a complicated movement combination of the pot.

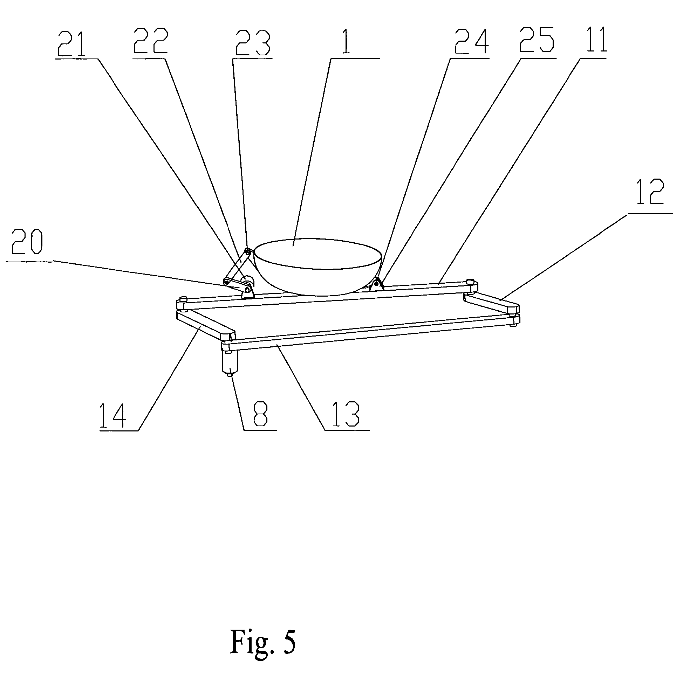

Figure 5 shows another pot-waggling device with a second motion mechanism. A pot-shaking mechanism, comprising a pot-shaking crank 20, a pot-shaking motor 21, a pot-shaking connecting rod 22, a pot-shaking revolving shaft 23 and a pot-shaking gemel 24 and a gemel bracket 25, is added on the four-connecting-rod mechanism as that shown in figure 3. This pot-shaking mechanism can drive the pot 1 up and down with the pot-shaking motor 21. Of course it can be used together with a four-connecting-rod mechanism to implement a movement combination.

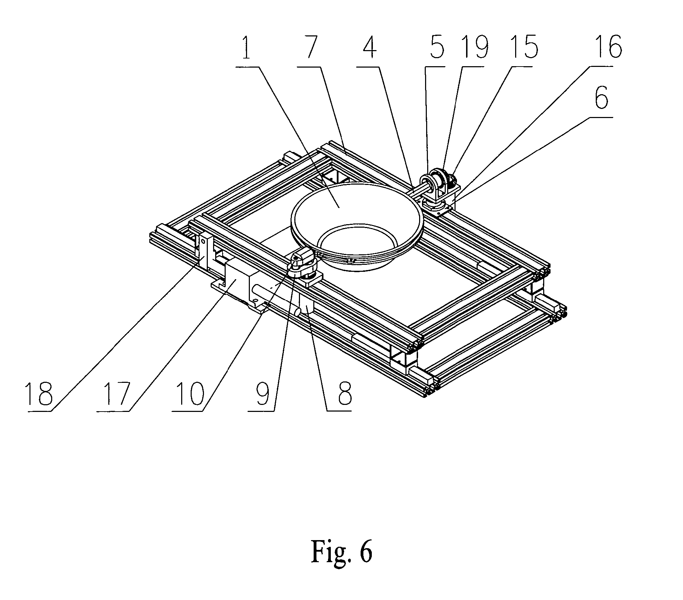

Figure 6 shows still another embodiment of the present invention with which the third motion mechanism is equipped. In this embodiment, the pot-waggling device shown in figure 4 is installed on a displaceable bracket 18. Motor 17 drives the whole device to produce translational displacement. The device of this embodiment can make a circular movement, a rotation and a translational displacement separately or a complicated combination of these three movements.

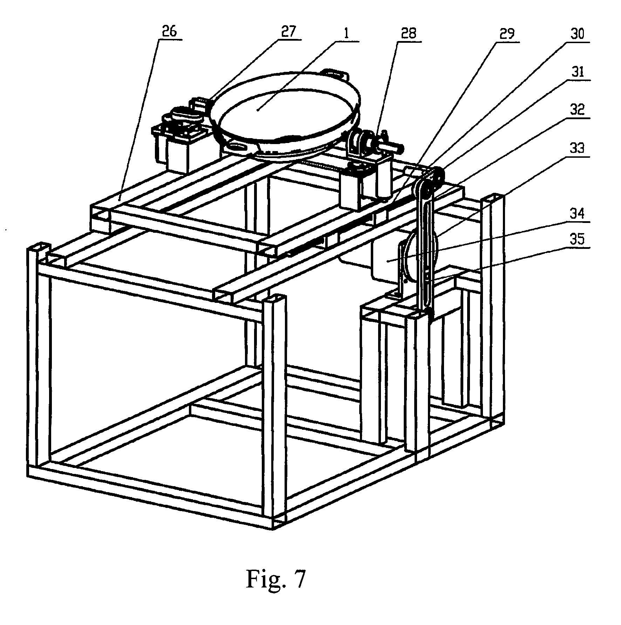

Figure 7 shows a still further embodiment of the present invention with which a crank shaper mechanism, i.e. a crank guide-bar mechanism, is equipped. Motor 34 drives a rotating plate 33 to rotate. A slider 35 slides in the long hole of a swing-rod 32 and poke this swing-rod to swing leftwards and rightwards. A pot translation frame 26 is driven to make a reciprocal translation through a connecting rod 31 and a connecting shaft 30. 29 is a translation track. The acceleration of this device can be produced by the mechanism itself, because when the pot translation frame 26 moves near to the reverse limit positions the acceleration can be produced. The value of this acceleration depends on the speed of this mechanism. When motor 34 is a constant-speed motor, this acceleration depends on the rotating speed of the motor. When motor 34 is a speed-adjusting motor, this acceleration can be set and adjusted through the selection and adjustment of the rotating speed of the motor. Of course, the acceleration can also be produced by the power source, such as a speed-adjusting motor. The said two accelerations can be used separately or together. When the above mechanism moves reciprocally, the materials can be waggled in a straight line in the pot. This device for waggling a pot can further comprise a second motion mechanism 27 and a third motion mechanism 28, which can drive the pot 1 to make a circular movement and a rotation respectively.

## Claims

1. An automatic or semi-automatic method for waggling a pot in an automatic or semi-automatic cooking equipment, comprising the following steps:
(1) moving said pot in a planar or curved surface, and
(2) accelerating or decelerating said pot at an appropriate position and at appropriate moment, and changing the positions of at least part of materials in said pot.

2. The automatic or semi-automatic method for waggling a pot according to claim 1, wherein said moving of said pot comprises a translational vector in the horizontal and/or vertical direction of the working platform of said cooking equipment.

3. The automatic or semi-automatic method for waggling a pot according to claim 1 or 2, wherein said moving of said pot comprises a rotation around a straight line as its axis.

4. The automatic or semi-automatic method for waggling a pot according to claim 2, wherein said moving of said pot is substantially a movement in a straight line.

5. The automatic or semi-automatic method for waggling a pot according to claim 3, wherein said moving of said pot is substantially a circular movement.

6. The automatic or semi-automatic method for waggling a pot according to claim 1, wherein said moving of said pot is a continuous, un-continuous and/or reciprocating movement.

7. The automatic or semi-automatic method for waggling a pot according to claim 1, further comprising a step of moving the materials in said pot through a turning-over or stirring tool.

8. The automatic or semi-automatic method for waggling a pot according to claim 1, further comprising a step of moving the materials in said pot to an appropriate area before producing an acceleration or a deceleration.

9. A device for waggling or shaking a pot, comprising a pot, a motion mechanism, a driving mechanism, and a control system, in which said pot is installed on said motion mechanism or connected to said motion mechanism,
wherein said driving mechanism drives said motion mechanism and said pot to make a linear, curvilinear or circular movement in a planar or curved surface in variable speed, and said driving mechanism is an electricity-driving unit, a magnetic-driving unit, an aerodynamic-driving unit, and/or a hydraulic-driving unit.

10. The device according to claim 9, wherein said motion mechanism is a mechanism which produces an acceleration or a deceleration when driven by said driving mechanism in a constant speed.

11. The device according to claim 9, further comprising a second motion mechanism or more motion mechanisms which drive said pot, connected to said second motion mechanism or more motion mechanisms, to make a linear, curvilinear or circular movement in a planar or curved surface.

12. The device according to claim 9, further comprising a connection mechanism through which said motion mechanism is connected to said pot.

13. The device according to claim 9, further comprising a turning-over or stirring tool to assist the movement of the materials in said pot.

14. An cooking equipment which comprises the device for waggling or shaking a pot according to one of claims 9-13.
